# EUROPEAN PATENT APPLICATION

(11) **EP 0 794 071 A2**
(43) Date of publication of application: **10.09.1997**
(21) Application number: 96202160.6
(22) Date of filing: 31.07.1996
(51) Int. Cl.: B60B 1/00, B21F 39/00

(54) **A wheel spoke and a method for the production thereof**

(30) Priority: 04.03.1996 IT PD960052
(71) Applicant: ALPINA RAGGI S.p.A., I-20043 Arcore (MI) (IT)
(72) Inventor: Cappellotto, Guido, 20043 Arcore (IT)
(74) Representative: Cantaluppi, Stefano

(57) **Abstract**

A spoke for wheels (R), comprising a substantially cylindrical elongate rod (2) which has a flattened portion in the area of at least one of its intermediate portions (7).

## Description

The present invention relates to a wheel spoke of the type comprising a substantially cylindrical elongate rod. The invention relates also to a method for the production thereof and also to a spoked wheel.

Spokes of this type are customarily used to connect the rim and the hub of a spoked wheel to one another. In conventional known forms, the rod carries at its respective opposite ends a widened head, which holds the spoke on the hub, and a thread for a nipple by means of which the spoke is attached to the rim. In its turn, the head can be formed in the area of an elbow at right-angles to the rod (and in that case the spokes are referred to as hooked spokes), or on the same axis as the rod (and in that case the spokes are referred to as straight spokes).

In both hooked and straight spokes, there is a so-called "crossover" zone corresponding to the rod portion which crosses with the rod of an adjacent spoke during the assembly of the wheel.

Among the disadvantages described in connection with the structure of known spokes is the fact that, owing to the vibrations to which the wheel is subjected, the spokes, especially in the crossover zone, rub against one another, causing local wear; this wear rapidly damages the surface of the spoke with consequent weakening thereof.

In addition, in the assembly of a wheel with straight spokes, there is the troublesome problem that the spokes rotate relative to the hub and, when the wheel is being assembled, they have to be held manually or by other means until the nipple has been completely tightened in order to oppose the torque transmitted by the nipple-tightening tool.

Not least is the fact that the cylindrical surface of the spoke makes it difficult, if not impossible, to mark it; therefore, the manufacturer's identification mark is more often applied to the head of the spoke where, however, it cannot be seen by the public. A publicity effect particularly desired in the sporting world is thus lost.

The problem on which this invention is based is to provide a wheel spoke which is designed structurally and functionally to avoid the disadvantages described with reference to the mentioned prior art.

This problem is solved by the invention with a spoke produced in accordance with the claims which follow.

The characteristics and advantages of the invention will become clear from the following detailed description of a preferred, but not exclusive, embodiment thereof illustrated by way of non-limiting example with reference to the appended drawings, in which:

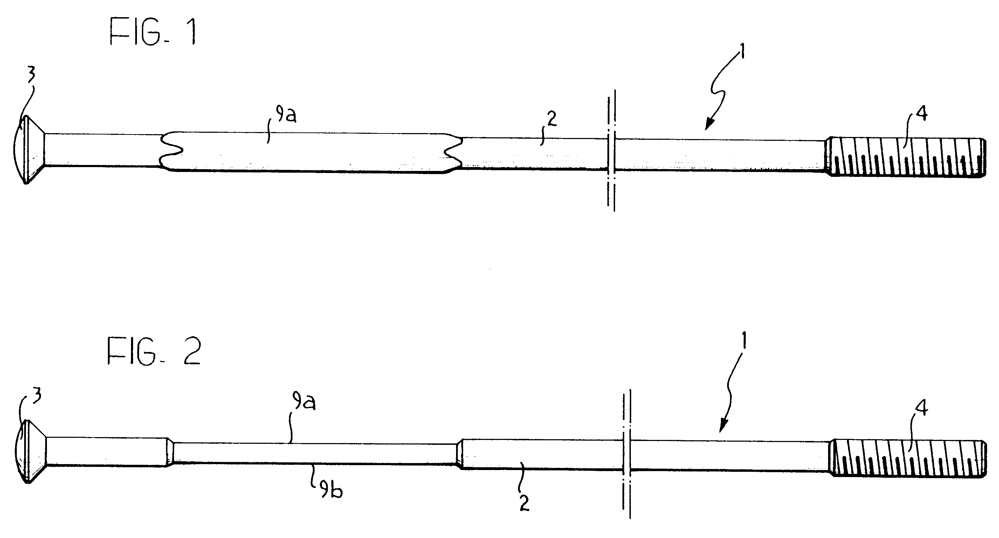

- Figure 1 is a plan view of a spoke produced in accordance with this invention;
- Figure 2 is a side elevation of the spoke of Figure 1;

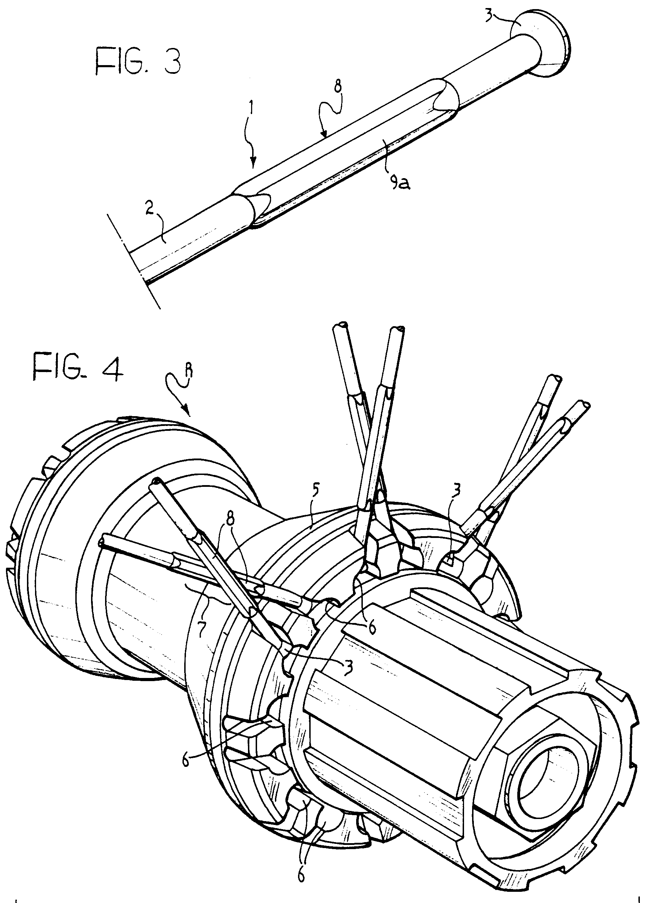

- Figure 3 is a partial perspective view of the spoke of the previous Figures; and
- Figure 4 is a partial perspective view of a spoked wheel produced in accordance with the present invention.

In the Figures, a straight spoke produced in accordance with the present invention is generally indicated 1 and comprises a substantially cylindrical rod 2 which carries a head 3 at one of its axial ends and a threaded portion 4 at the axially opposite end. The head 3 is designed to be upset on the rod 2 and is used to attach (relative to the axial direction of the rod) the spoke 1 to a hub 5 of a spoked wheel R (shown only partially in Figure 4). To that end, the head 3 of each spoke of the wheel R is received in a corresponding seat 6 in the hub 5.

It should be noted, however, that, except for the restraint resulting from the friction between the spoke and the hub, the head 3 can rotate freely in the seat 6.

It should also be noted that adjacent spokes, when mounted on the wheel R, cross one another in an intermediate zone, near the head 3, known precisely as the crossover zone.

In this crossover zone, marked 7 in the drawings, is a double compression indent, generally indicated 8, obtained by plastic compression deformation of the spoke in the area of diametrically opposite zones thereof. This indent defines a flattened portion of the spoke with two opposed flat and parallel surfaces 9a, b. A stamp (not shown in the drawings), for example reproducing the manufacturer's mark, can be imprinted on one or both of the above-mentioned surfaces.

Owing to the fact that adjacent spokes, in the mutually crossing state, are almost in contact with one another in the crossover zone, the juxtaposed surfaces thereof, by interfering with one another, oppose their free rotation about the respective axes at the stage when the nipples are tightened during the assembly of the wheel (so-called stretching operation).

The advantages obtained by this invention therefore include the fact that the friction between adjacent spokes in the crossover zone is reduced, the mounting of the nipples in the wheel-stretching stage when straight spokes are used is facilitated, and markings can be reproduced on areas of the spoke that are visible when the wheel is assembled, with a consequent improved publicity effect, especially in sporting competitions.

## Claims

1. A wheel spoke comprising a substantially cylindrical elongate rod (2), characterised in that the rod (2) has a flattened portion in the area of at least one of its intermediate portions (7).

2. A spoke according to Claim 1, wherein the flattened portion is formed by a compression indent (8) of the intermediate portion (7).

3. A spoke according to Claim 2, wherein the compression indent (8) is such as to define two substantially flat and parallel opposed surfaces (9a, b) on the said portion of the spoke.

4. A spoke according to one or more of the preceding claims, wherein the flattened portion is formed near a head (3) of the spoke.

5. A spoke according to one or more of the preceding claims, wherein the flattened portion is formed in the area of a zone of the spoke which can cross with an adjacent spoke during the mounting of the spokes on a wheel (R).

6. A spoke according to one or more of the preceding claims, wherein the spoke is of the straight type with a head (3) on the same axis as the rod (2).

7. A spoke according to one or more of the preceding claims, wherein the flattened portion constitutes a seat for the application of a stamp.

8. A spoked wheel, characterised in that it comprises a plurality of spokes according to one or more of the preceding claims.

9. A method for the manufacture of spokes for wheels (R) comprising a step of arranging an elongate rod (2) of the spoke and characterised in that it comprises a step of plastic deformation of at least one intermediate portion (7) of the rod (2) to obtain a compression indent (8).
